# EUROPEAN PATENT APPLICATION

(11) **EP 2 395 298 A1**
(43) Date of publication of application: **14.12.2011**
(21) Application number: 11166024.7
(22) Date of filing: 13.05.2011
(51) Int. Cl.: F24J 2/04, H01L 31/042

(54) **Element for ventilated wall**

(30) Priority: 08.06.2010 IT VR20100120
(71) Applicant: Siti - B&T Group S.p.A., 41043 Formigine (Modena) (IT)
(72) Inventor: Benatti, Paolo, 41043, Formigine (Modena) (IT)
(74) Representative: Feltrinelli, Secondo Andrea

(57) **Abstract**

A covering element (10; 100; 200; 300; 400) for a ventilated external wall of a wall plane (P) of a building is equipped with at least one photovoltaic module (20; 120; 220; 320; 420) which generates electric power by exploiting sunlight; the covering element comprises a main support portion (12; 102; 202; 302; 402) with a secondary portion (14; 104; 204; 304; 404) towards the outside with respect to the wall plane (P), the photovoltaic module (20; 120; 220; 320; 420) is flexible, spread out and fixed onto the main support portion (12; 102; 202; 302; 402), and has a section (22; 122; 222; 322; 422) cantilevered with respect to the main support portion (12; 102; 202; 302; 402); on the section (22; 122; 222; 322; 422) there is an electrical junction box (24; 124; 224; 324; 424) which is protected by the secondary portion (14; 104; 204; 304; 404) of an adjacent element; a ventilated wall formed by the covering elements (10; 100; 200; 300; 404) and a method for making the ventilated wall are also foreseen.

## Description

### TECHNICAL FIELD OF THE INVENTION

The present invention refers to an element for a ventilated wall for covering the outside of buildings equipped with a photovoltaic module.

### STATE OF THE ART

For correcting thermal bridges and for reducing the effects induced in structures and in wall facings by rapid or considerable variations in the outside temperature, it is known to make ventilated walls for covering the outside of buildings. This system makes it possible to keep the external walls at a higher temperature, avoiding condensation phenomena and increasing living comfort.

The ventilated wall is a system for insulating from outside, which is normally made up of three layers: one insulating layer applied to the perimeter wall, a ventilated gap, that is open at the base and at the top of the face, allowing the insulation to be ventilated and dispersing water vapour from inside the rooms; and an outer coating, made up of different materials such as various types of slabs, staves, fabricated sheet metal, reinforced plaster, stone or cement materials. See for example ES-2153796 or US-7 572 048. In particular, the outer coating is made with ceramic tiles.

In order to exploit the wide surface, of a ventilated wall, which is hit by sunlight, one or more photovoltaic modules are often associated to the outer coating so as to generate electric power that can be exploited inside the building. A particular tile is described in WO 2008-120251, in which the photosensitive element is integrated in the material forming the tile.

One type of photovoltaic module that is used a lot in the field of roof tiles is that of the flexible type, which is in the form of a band or sheet and is fixed above the tile. Similar bands are described for example in JP-2007/243166, JP-2007/298213.

Flexible photovoltaic modules have predetermined dimensions, and are installed like a mosaic so as to cover the entire wall. Each photovoltaic sheet usually has an active central part, which is sensitive to sunlight and generates electric energy, and a passive frame. The active part is formed by solar cells connected to one another in series or in parallel, and all the cells are connected to two main output conductors which are taken to one or more junction boxes. Such a box acts as a connection point between the photovoltaic sheet and an electric circuit downstream that draws the generated electric power. The junction box is often provided with protection diodes for the photosensitive elements.

Since in a wall there are many sheets alongside one another, all the relative junction boxes must be connected to one another. If it is desired to use flexible photovoltaic modules for the tiles of ventilated walls, the wiring is laborious to install and it can also generate discontinuities in the outer surface of the wall. Therefore, it is necessary to ensure that the junction boxes are not positioned outside the wall. Moreover, the photovoltaic sheet must not be bent with excessive angles of curvature, since it could become damaged over time. Therefore, the degrees of freedom in deforming the sheet so as to arrange the junction box as desired are limited.

### PURPOSES OF THE INVENTION

One purpose of the invention is to improve the state of the art by providing a new type of element for the ventilated wall.

Another purpose of the invention is to make an element for ventilated wall that is equipped with at least one photovoltaic module in which the wiring is simple to make and is protected against bad weather.

Such purposes are obtained by an element for ventilated wall as defined in claim 1, whereas the dependent claims concern preferred embodiments of the invention.

### BRIEF DESCRIPTION OF THE DRAWINGS

The characteristics and the advantages of the invention shall become clearer from the following description of an example embodiment, together with the attached drawings, in which:
figure 1 shows a partial section view of a ventilated wall made with the covering elements according to the invention;
figures 2-4 schematically show partial section views of other embodiments of the covering element for ventilated wall according to the invention;
figure 5 shows a partial section view of a ventilated wall made with the covering elements according to the invention, in another embodiment.

### EMBODIMENTS OF THE INVENTION

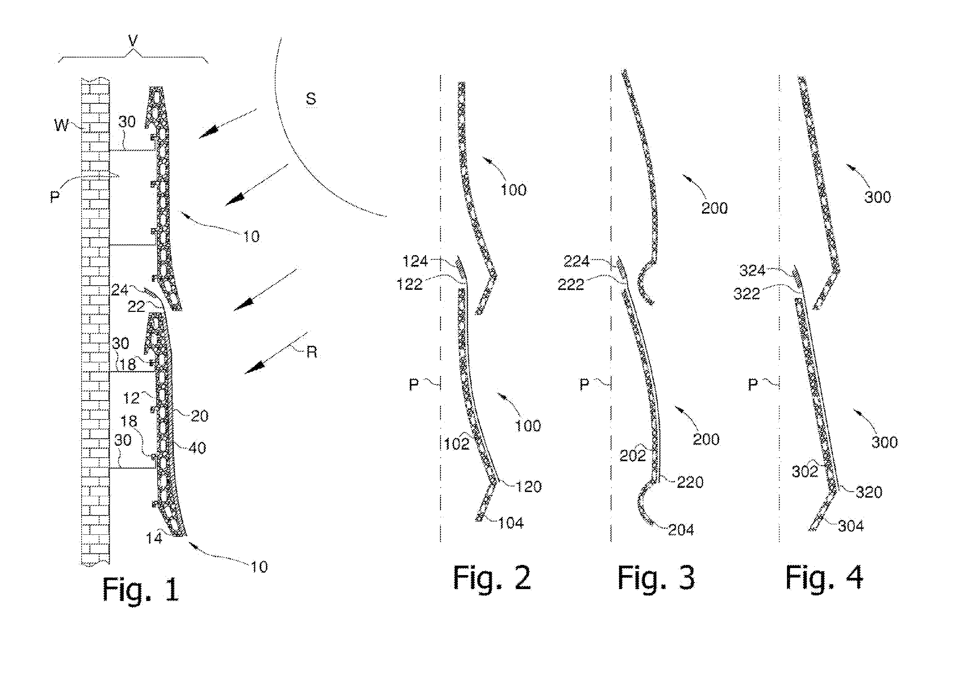

Figure 1 represents a portion of a ventilated wall V formed by a wall W and by covering elements 10 fixed to it through spacer brackets 30. Fixing the elements 10 to the wall W can be carried out in other known ways, like for example through a trestlework support structure.

Each covering element 10 comprises a body, for example made in ceramic material, which has a main portion 12 and a secondary portion 14; the secondary portion 14 is in particular formed by a raised end edge 14. The main portion 12 is mounted spaced and substantially parallel to the vertical plane P of the wall W through the brackets 30. For this purpose, the brackets 30 are engaged in integrated hooks 18 present on the back of the element 10, from which the entire element 10 is supported.

More in detail, the raised edge 14 corresponds to the lower edge of the element 10, and it curves towards outside of the wall V, or rather, it progressively moves away from the wall W.

In an embodiment according to the present invention, the element 10 is made with known technologies used for the production of ceramic tiles, for example through an extrusion process.

On the surface of every element 10, a flexible photovoltaic module 20, of the known type available in the form of rolls or belts, is spread out and fixed to it through a layer of adhesive or glue 40; alternatively, a double sided tape can be used.

The module 20, shown for the sake of simplicity only in the element of figure 1, generates electric power when it is illuminated by rays R of the sun S. The module 20 projects at the top, cantilevered from the main portion 12 with a section 22, on the side opposite to the raised side 14.

On the section 22 there are one or more junction boxes 24, which are constructed and operate in a known way. The section 22 preferably corresponds to the frame without photosensitive cells which is generally present in each flexible photovoltaic module.

When making a ventilated wall V, the elements 10 are arranged alongside one another so as to cover the wall W, and so that the raised edge 14 of each element 10 is lined up with the edge of the adjacent element in a vertical direction or surmounts the latter at a certain distance. One characteristic of the invention is to ensure that the junction box 24 of each element 10 remains shielded, covered and protected by an adjacent element, in figure 1 the upper one.

For this purpose, the elements 10 indeed have a secondary raised portion 14, under which they can hide the projecting extension of a photovoltaic module 20. The small distance foreseen between two adjacent elements at a secondary portion 14 is advantageous from the point of view of the convective movements of the air below the wall: in particular, in addition to promoting said movements, it also makes it possible to obtain a better cooling of the junction box 24 and of the electric connections in general.

All the boxes 24 of the various elements 10 are then electrically connected to one another in a known manner.

It should be noted that, despite the protected position of the box 24, there are no operation problems or less efficiency of the module 20, due to the fact that a part thereof ends up in the shade, since in such a part there is the passive frame stripped of cells.

An arrangement like that of the elements 10, for the same amount of surface to be covered, maximises the electric power generated. Indeed, the overall active surface of the modules 20 is greater, since the surface of the frame - the section 22 - which is passive and does not generate power, is excluded from the total surface in light, leaving it to a greater number of active cells. Consequently, the performance of a module 20, which virtually behaves as if it had a greater active surface, increases.

It should also be noted that the disappearance of part of the passive frame occurs without excessive folding of the module 20, i.e. without excessive plastic stress which could reduce its useful life.

Another advantage of the present invention is that of being able to also exploit the vertical walls, and not only the roof, as usual, so as to generate electric power.

In particular, it is possible to coat a building with a square, rectangular or similar plan, with the covering elements according to the present invention at least on three sides, excluding for example the most north-facing wall, in such a way increasing the possibility of generating electric power per unit of surface of ground covered. This is even more obvious in the case of buildings that are very high.

Figures 2-4 show other embodiments of the elements according to the present invention, that are suitable for forming a ventilated wall. For the sake of simplicity only the vertical plane P relative to the wall to be covered is shown.

In figure 2 an element 100 is made up of a main concave portion 102, with its concavity facing towards outside the ventilated wall, and a secondary portion made up of a flat edge 104 which extends from the lower end of the main concave portion 102 towards inside the ventilated wall.

In practice the main portion 102 and the edge 104 form a cusp 106 in the joining points. On the main concave portion 102 there is a flexible photovoltaic module 120, whereas the edge 104 does not have one. The module 120, shown in the figures, for the sake of simplicity only in one tile, is the same as the element 10 of the previous embodiment, and like previously it is equipped with a junction box 124 arranged on its section 122 which projects from the main concave portion 102.

The elements 100 are arranged so that the edge 104 of one covers a small end area of the main concave portion 102 of another element. The box 124 of every element 100 is hidden and protected under the edge 104 of an adjacent element.

In figure 3 an element 200 is made up of a main convex portion 202, with its convexity facing towards outside the ventilated wall, and of a raised portion made up of an arched edge 204 - with a U-shaped section - which projects from the lower secondary end of the main convex portion 202. On the convex part 202 there is a flexible photovoltaic module 220, whereas the edge 204 does not have one. The module 220 is the same as the element 10 of the previous embodiment, and it is equipped with a junction box 224 arranged on its section 222 which projects from the main convex portion 202.

The elements 200 are arranged so that the edge 204 of one covers a small end area of the main convex portion 202 of another element. The box 224 of every element 200 is hidden and protected under the edge 204 of an adjacent element.

In figure 4, the element 300 is made up of a main flat portion 302, that is slightly inclined with respect to the plane P, and of a secondary portion made up of a flat edge 304 which extends from the lower edge of the main flat portion 302 towards inside the ventilated wall. In practice the main portion 302 and the edge 304 form a cusp 306 in the joining points. On the main flat portion 302 there is a flexible photovoltaic module 320, whereas the edge 304 does not have one. The module 320 is the same as the element 10 of the previous embodiment and it is equipped with a junction box 324 arranged on its section 322 which projects from the main flat portion 302.

The elements 300 are arranged so that the edge 304 of one covers a small end area of the main flat portion 302 of another element. The box 324 of each element is hidden and protected under the edge 304 of an adjacent element.

Other embodiments can be made for example by combining the forms of the aforementioned main parts and the edges with one another.

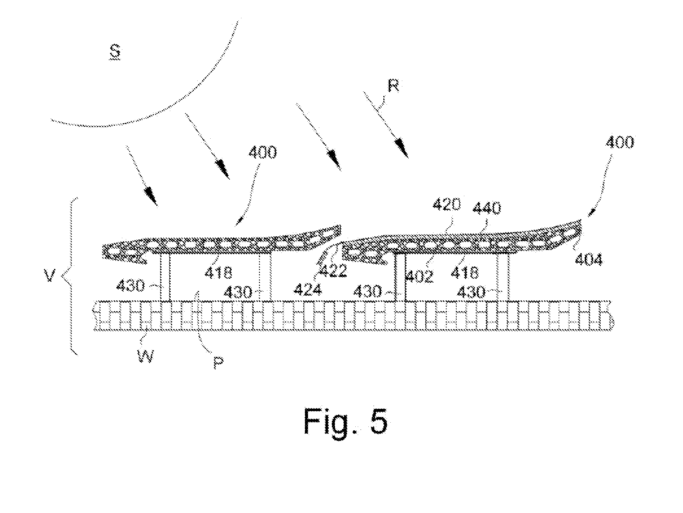

Another embodiment of the element according to the invention is represented in figure 5, which is a section of a ventilated wall V made according to a horizontal plane.

In figure 5 the elements 400 each comprise a main portion 402 and a secondary portion 404 made up of an end edge. The shapes and the geometries of the element 400 according to the present embodiment are the same as the embodiment of figure 1, but with a different orientation in space. Indeed, in this embodiment the secondary portion 404 of an element 400 is laterally placed over the adjacent element, and is no longer in the vertical direction like in the embodiment of figure 1.

On the surface of each element 400 a flexible photovoltaic module 420, of the known type available in the form of rolls or belts, is spread out and is fixed to it through a layer of adhesive or glue 440; alternatively, a double sided tape can be used.

The module 420 laterally projects cantilevered from the main portion 402 with a section 422, on the side opposite to the secondary portion 404.

On the section 422 there are one or more junction boxes 424, which are constructed and operate in a known way. The section 422 preferably corresponds to the frame without photosensitive cells which is generally present in every flexible photovoltaic module.

The main portion 402 is mounted space apart and substantially parallel to the vertical plane P of the wall W through the brackets 430. The brackets 430, for this purpose, are engaged with integrated hooks 418 present on the back of the element 400, from which the entire element 400 is supported. The embodiments described in figures 2-5 foresee a slight inclination towards outside of the part of element that supports the photovoltaic module. This improves the angle of incidence of the rays R on the photovoltaic cells.

Moreover, it should be noted how it is advantageous to equip an element with an edge facing towards the adjacent element. Such an edge closes the opening or slit between two elements better and therefore does not only give more structural coherence to the ventilated wall but also protects the underlying junction box better.

It must be noted that, even in the embodiment of figure 1, the main portion 12 can be arranged slightly inclined towards the direction from which the sunlight comes, so as to improve the angle of incidence of the sun rays R on the photovoltaic cells.

Moreover, the same secondary portion 14 can be arranged on the same plane as the main portion 12, so that, in practice, the entire covering element 10 is substantially flat and the aforementioned covering elements 10 that form the ventilated wall are substantially arranged like fish scales, i.e. with one edge over the other.

The present invention thus conceived can undergo numerous modifications and variants all covered by the scope of protection of the claims.

## Claims

1. Covering element (10, 100, 200, 300, 400) for ventilated wall for the outer covering of a plane of a wall (P) in a building, provided with at least a photovoltaic module (20, 120, 220, 320, 420) for generating electrical power using solar radiation, **characterized in that** it comprises a main support portion (12, 102, 202, 302, 402) with a secondary portion (14, 104, 204, 304, 404) outwards from the plane of the wall (P) said photovoltaic module (20, 120, 220, 320, 420) being of the flexible type, lying and fixed on the main portion of the support (12, 102, 202, 302, 402), and having a section (22; 122; 222; 322; 422) cantilevered with respect to the support portion (12, 102, 202, 302, 402), on which section (22, 122, 222, 322, 422) is present at least one electrical junction box (24, 124, 224, 324, 424) .

2. Element according to claim 1, comprising a main portion (12) substantially flat, that is placed substantially parallel to the plane (P) of the wall and/or slightly tilted toward the direction from which the solar radiation comes, and a secondary portion (14) comprising a lower edge that curves outwards so as to form said raised side, said module (20) being laid and fixed to the substantially flat main portion (12) and to the lower edge (14).

3. Element according to claim 1, wherein said secondary portion (104, 204, 304) extends from the main portion (102, 202, 302) inwards and is not covered by the photovoltaic module (120, 220, 320).

4. Element according to claim 3, wherein the main portion (302) is flat and is placed tilted with respect to the plane of the wall (P).

5. Element according to claim 3, wherein the main portion (102) is concave and is placed tilted with respect to the plane of the wall (P).

6. Element according to claim 3, wherein the main portion (202) is convex and is placed tilted with respect to the plane of the wall (P).

7. Element according to claim 3, wherein the secondary portion (204) has U-section with outwards concavity.

8. Element according to claim 3, wherein the secondary portion (104, 304) is flat and inwards facing.

9. Element according to any of the preceding claims, wherein the main portion (12, 102, 202, 302, 402) and the secondary portion (14, 104, 204, 304, 404) are made of ceramic or stone material.

10. Element according to the preceding claim,
wherein the main portion (12, 102, 202, 302, 402) and the secondary portion (14, 104, 204, 304, 404) are made of ceramic material by means of an extrusion process.

11. Ventilated wall for the outer covering of a plane of a wall (P) in a building, **characterized in that** it comprises one or more elements (10, 100, 200, 300, 400) according to one or more of the preceding claims.

12. Method for making an outer layer of a ventilated
wall consisting of covering elements (10, 100, 200, 300, 400) juxtaposed, including the following steps:
providing a flexible photovoltaic module (20, 120, 220, 320, 420) having one or more junction boxes (24, 124, 224, 324, 424) on a side,
placing the flexible photovoltaic module (20, 120, 220, 320, 420) on each element (10, 100, 200, 300, 400),
leaving a section (22, 122, 222, 322, 422) of module, including said box (24, 124, 224, 324, 424), cantilevered with respect to element (10, 100, 200, 300, 400),
arrange the elements (10, 100, 200, 300, 400) tiled like a mosaic in order to make said outer layer, and in such a way that each element (10, 100, 200, 300, 400) has a secondary portion (14, 104, 204, 304, 404) with respect to an ideal plane parallel to the wall to be covered,
and
placing the section (22, 122, 222, 322, 422) of module including the box (24, 124, 224, 324, 424) under the raised side (14, 104, 204, 304, 404) of the element (10, 100, 200, 300, 400) .
